# EUROPÄISCHE PATENTSCHRIFT

(11) **EP 0 847 326 B1**
(45) Veröffentlichungstag und Bekanntmachung des Hinweises auf die Patenterteilung: **12.12.2001**
(21) Anmeldenummer: 96930106.8
(22) Anmeldetag: 26.08.1996
(51) Int. Cl.: B29B 17/02, C08J 11/08

(54) **KONTINUIERLICH ABLAUFENDES VERFAHREN ZUR WIEDERGEWINNUNG VON ROHMATERIALIEN AUS BESCHICHTETEN FOLIEN, SOWIE VORRICHTUNGEN DAFÜR**
CONTINUOUS PROCESS FOR RECOVERING RAW MATERIALS FROM COATED FOILS, AND DEVICES FOR CARRYING OUT THIS PROCESS
PROCEDE CONTINU DE RECUPERATION DE MATERIAUX BRUTS PROVENANT DE FILMS REVETUS, ET DISPOSITIFS DE MISE EN OEUVRE DUDIT PROCEDE

(30) Priorität: 30.08.1995 DE 19531886
(43) Veröffentlichungstag der Anmeldung: 17.06.1998
(73) Patentinhaber: EMTEC Magnetics GmbH, 67059 Ludwigshafen (DE)
(72) Erfinder: STEPHAN, Oskar, D-68766 Hockenheim (DE); WEINGART, Franz, D-69181 Leimen (DE); BURKHARDT, Uwe, D-67468 Frankenstein (DE); THIELE, Heino, D-67063 Ludwigshafen (DE); SCHWARZ, Lothar, D-77704 Oberkirch (DE); MÜLLER, Norbert, D-67159 Friedelsheim (DE); EICHER, Jochen, D-67157 Wachenheim (DE)
(86) Internationale Anmeldenummer: EP9603761
(87) Internationale Veröffentlichungsnummer: WO9707952

(56) Entgegenhaltungen:
- DE-A- 3 341 608
- PATENT ABSTRACTS OF JAPAN vol. 18, no. 616 (M-1710), 24.November 1994 & JP,A,06 238667 (FUJI PHOTO FILM CO. LTD.), 30.August 1994, & DATABASE WPI Section Ch, Week 9439 Derwent Publications Ltd., London, GB; Class ALT, AN 94-313192 (39) & JP,A,06 238 667 (FUJI PHOTO FILM CO. LTD.) , 30.August 1994
- PATENT ABSTRACTS OF JAPAN vol. 3, no. 91 (C-054), 3.August 1979 & JP,A,54 066985 (NIPPON ZEON CO. LTD.), 29.Mai 1979, & DATABASE WPI Section Ch, Week 7928 Derwent Publications Ltd., London, GB; Class ATR, AN 79-51369B (28) & JP,A,54 066 985 (JAPAN GEON K.K.)

## Beschreibung

Die Erfindung betrifft ein kontinuierlich ablaufendes Verfahren zur Wiedergewinnung von Rohmaterialien aus kleingeschnittenen Abfällen von beschichteten Folien, bestehend aus einem polymeren Schichtträger und einer darauf befindlichen Beschichtung oder Bedruckung, bei der weiterhin gegebenenfalls Pigmente in einer vemetzten oder unvernetzten Bindemittelmatrix dispergiert sind und wobei das Schichtträgermaterial sowie gegebenenfalls die Pigmente durch Behandlung in einem flüssigen Medium wiedergewonnen werden.

Weiterhin betrifft die Erfindung Vorrichtungen zur Durchführung des Verfahrens.

In den letzten Jahren hat das schnelle Wachstum der Informations-Industrie einen extensiven Verbrauch von Druckplatten, fotografischen Filmen, magnetischen Speichermedien, wie Computer-Bänder, Audio-Bänder, Video-Bänder sowie Disketten in großem Umfang veranlaßt. Insbesondere sind Magnetbänder und Disketten, welche beispielsweise Polyethylenterephthalat als Schichtträger haben, aufgrund ihrer ausgezeichneten magnetischen und mechanischen Eigenschaften in den letzten Jahren in wachsendem Umfang hergestellt worden. Allgemein treten Reste und Abfälle solcher Speichermedien in großem Umfang bei der Herstellung und bei dem Gebrauch durch den Endverbraucher auf. Gegenwärtig werden solche Abfälle beseitigt, indem sie über den Hausmüll auf geordneten Deponien eingelagert oder in Verbrennungsöfen verbrannt werden. Unter dem Gesichtspunkt von Müllreduzierung sowie der Wiedergewinnung von Wertstoffen ist die volle Ausnutzung solcher Abfälle ein herausragendes Erfordernis.

Ein Verfahren der eingangs genannten gattungsmäßigen Art ist aus der DE-A 33 41 608 bekannt. Nach der Lehre dieser Schrift werden Magnetband-Abfälle kleingeschnitzelt, worauf die Magnetschicht in wässriger alkalischer Lösung vom Schichtträger abgelöst und anschließend die Trennung des Magnetpulvers vom Schichtträger durch Rührung bei hoher Geschwindigkeit durchgeführt wird. Dieses Verfahren erfordert eine sehr aufwendig aufgebaute voluminöse Apparatur sowie einen hohen Energieaufwand, da die Behandlungsflüssigkeit auf mindestens 90 °C erhitzt werden muß.

Weitere Verfahren, die auf einer Trennung von Magnetschicht von dem Schichtträger durch Basenbehandlung beruhen, sind beschrieben in den Japanischen Patentanmeldungen 112 979 (1978), 006 985 (1979), 070 404 (1978), 092 879 (1978), 167 601 (1987) sowie der Koreanischen Patentanmeldung 89/03614. Eine säurebedingte Trennung beschreiben die Japanischen Patentanmeldungen 317 707 (1988), 112 413 (1989) sowie 146 624 (1982). In der Japanischen Patentanmeldung 054 050 (1983) wird die Verwendung eines Lösungsmittelgemisches aus Phenol- und Ethantetrachlorid zur Ablösung der Magnetschicht beschrieben.

Aus der US-A-5 246 503 ist eine aus organischem Lösemittel, Wasser, Verdicker und Netzmittel bestehende Entschichtungslösung für Farbüberzüge bekannt, wobei jedoch der Überzug zusätzlich mechanisch durch Abkratzen entfernt werden muß.

Beabsichtigt man das Ablösen der pigmentierten Bindemittelschicht vom Schichtträger und verfolgt dabei das Ziel, die Wertstoffe, insbesondere das Pigment sowie das Polyethylenterephthalat wiederzugewinnen, sollte die PET-Folie möglichst nicht chemisch abgebaut oder angegriffen werden. Wenn andererseits in der magnetischen Schicht vernetzte Polyurethane, wie beispielsweise in der EP 0 099 533 beschrieben, als Bindemittel verwendet werden, so versagen größtenteils die oben beschriebenen Verfahren oder ergeben unbefriedigende Ergebnisse bezüglich Trennung, Ablösung und Wiedergewinnung.

In der DE-A 43 30 889 der gleichen Anmelderin ist ein Verfahren zur Wiedergewinnung von Rohmaterialien aus magnetischen Aufzeichnungsträgem beschrieben, bei welchem diese in kleingeschnittener Form in organischen Lösungsmitteln, einer darin löslichen Säure sowie Alkoholen oder Thioalkoholen und gegebenenfalls Tensiden bei erhöhter Temperatur behandelt werden, wobei die auf diese Weise abgelöste Magnetschicht vom Schichtträger durch einen Waschvorgang getrennt wird und wobei anschließend sowohl die kleingeschnitzelten Schichtträgerabfälle als auch die Magnetpulver getrocknet werden. Das Wesentliche an diesem Verfahren ist, daß durch das angegebene Behandlungsmedium die Estergruppen des Bindemittels Polyurethan durch Hydrolyse gespalten werden, wahrend gleichzeitig die Estergruppen des Polyethylenterephthalat-Schichtträgers chemison nicht zerstört werden, Es hat sich gezeigt, daß es schwierig ist, bei diesem Verfahren diese Randbedingungen zu erfüllen, außerdem müssen die kleingeschnitzelten Abfälle viele Stunden lang behandelt werden, um eine vollständige Trennung zu erreichen.

In der deutschen Anmeldung DE - A 44 07 900 der gleichen Anmelderin wird ein Verfahren zur Wiedergewinnung wie in der vorgenannten Anmeldung beschrieben, wobei die kleingeschnittenen Abfälle in einer Lösung, bestehend aus dem Kaliumsalz von mehrfach ungesättigten Fettsäuren, einem oder mehreren organischen Lösungsmitteln und/oder Wasser unter mechanischer Einwirkung behandelt werden und wobei anschließend das abgelöste Magnetpulver durch Waschen oder Sedimentieren oder im Magnetabscheider vom Schichtträger getrennt wird. Auch dieses Verfahren erfordert die Anwendung erhöhter Temperaturen im Bereich von 60 - 95 °C, ist nur im Batch-Betrieb durchzuführen und erlaubt auf diese Weise nicht, größere Mengen beschichteter Folien wirtschaftlich optimal zu behandeln.

JP - A - 6238667 beschreibt ein kontinuierliches Verfahren bei dem die kleingeschnittenen Magnetbandabfälle mit Hilfe einer erwärmten Behandlungslösung, wie wäßrige Lösungen von NaOH. Tenside enthaltende Lösungen, organischen Lösemitteln oder Gemische davon, in Trägerfolie und magnetisierbaret Partikel gespalten werden. Die Magnetbandabfalle werden zunächst in dem mit Behandlungslösung gefüllten Ablösekessel gefordert, dort einige Minuten geruhrt und dann einem Mischer, der als Trennbeschleuniger fungiert, zugeführt. In einem Drehsieb werden Folienteilchen und magnetisierbare Partikel getrennt und die Partikel aus der Behandlungslösung filtriert. Die so gereinigte Behandlungslösung wird dem Ablösekessel wieder zugeführt. Dieses Verfahren erfordert ebenfalls einen hohen Energieaufwand, da die Behandlungslösung auf 70 bis 80°C erwärmt werden muß.

Daher bestand die Aufgabe, ein Verfahren der eingangs genannten gattungsmäßigen Art und Vorrichtungen dafür zu finden, welches bei Zimmertemperatur durchgeführt werden kann, wobei die Behandlungslösung wiedergewonnen wird und wobei große Mengen beschichteter Folien werkstofflich recycelt werden konnen.

Gelöst wurde diese Aufgabe mit einem Verfahren gemäß Anspruch 1 und Vorrichtungen dafür gemäß den mabhängigen Ansprüchen 5 und 6. Weitere Einzelheiten der Erfindung gehen aus den Figuren und der Beschreibung hervor.

Die Erfindung wird nun anhand der Figuren näher erlautert, und zwar zeigt
- Figur 1: ein dreistufiges Ablaufschema gemaß der vorliegenden Erfindung
- Figur 2: einen Schnitt durch einen dreistufigen doppelwandigen Durchflußmischer nach dem Gleichstrom-Prinzip
- Figur 3: einen Schnitt durch einen dreistufigen doppelwandigen Durchflußmischer nach dem Gegenstrom-Prinzip
- Figur 4: einen Schnitt durch einen dreistufigen Durchflußmischer nach dem Dekanter-Prinzio

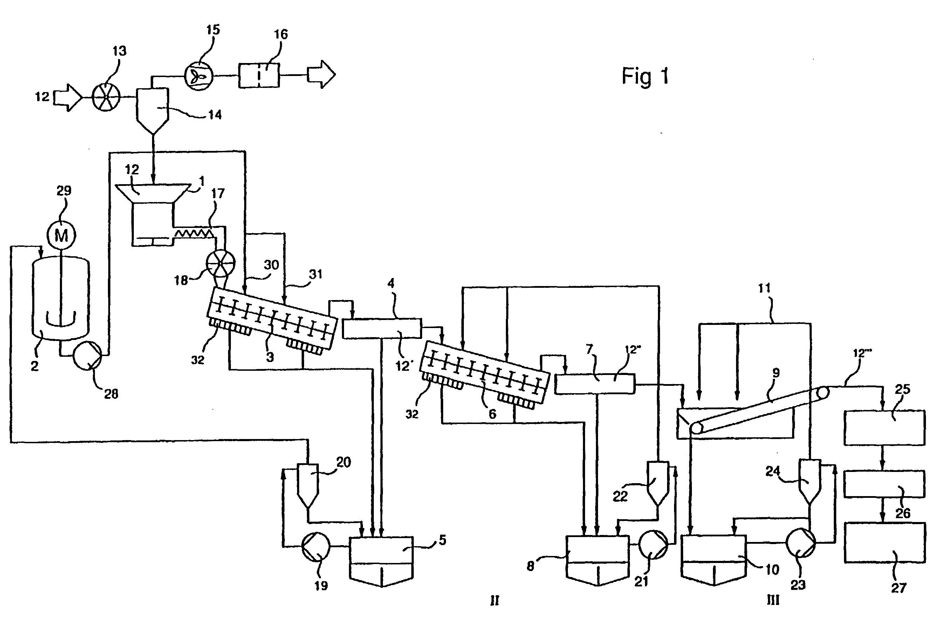

Zunächst wird anhand der Figur 1 das erfindungsgemäße Verfahren in einer Ausführungsform erläutert, wobei diese Ausführungsform zur Entschichtung der Folien in drei Kreisläufen I, II und III durchgeführt wird.

Das zu entschichtende Produkt (12), etwa bedruckte oder beschichtete Aufzeichnungsträger, wie beispielsweise Magnetbänder oder Fotofilme, wird in einer Schneidmühle (13) in kleine Stücke von definierter Länge, vorzugsweise 0,5 - 10 cm Länge, geschnitten. Bei der Zerkleinerung entsteht in geringen Mengen Schneidstaub, der in einem der Schneidmühle nachgeschalteten Abscheider (14) von den großeren Schnipseln getrennt wird. Als Abscheider wird in dem Beispiel gemäß der Figur 1 ein Gaszyklon eingesetzt, bei dem die Trennung durch Zentrifugalkräfte erfolgt. Die aus dem Zyklon (14) kommende Abluft wird über eine Leitung mittels eines Ventilators (15) und eines Filters (16) abgesaugt und gereinigt und dann als Abluft fortgeblasen. Die Schnipsel (12) kommen dann in einen Vorratsbehälter (1) und werden von diesem durch eine Austragsvorrichtung (17) und eine Dosiervomchtung (18), beispielsweise eine Zellenradschleuse, in den ersten Durchflußmischer (3) zur Entschichtung eingebracht. In diesen Durchflußmischer wird aus dem Vorratsbehälter (2) das Entschichtungslosemittel eingeleitet. Der Behälter (2) wird mit einem Rührwerk (29) gerührt. Das Entschichtungsmittel wird mittels einer Dosierpumpe (28) zudosiert und kann in mindestens einer, vorzugsweise zwei oder mehreren Stellen (30, 31) in den Durchflußmischer (3) gelangen.

Das flüssige Entschichtungsmittel ist im wesentlichen das Gleiche wie das in der vorgenannten deutschen DE - A 44 07 900 beschriebene. Es besteht aus einem oder mehreren organischen Tensiden oder deren Salzen, einem oder mehreren organischen Lösungsmitteln und/oder Wasser sowie gegebenenfalls einem Katalysator.

Die Tensidverbindung kann beispielsweise ein Kaliumsalz von mehrfach ungesättigten Fettsäuren (Trivialname Schmierseife) oder oder ein Gemisch aus Phosphaten, Tensiden und Komplexbildnem (Handelsname Mukasol®) sein. Das Tensid kann ionisch oder nicht-ionisch sein.

Als organische Lösungsmittel sind unter anderem N-Methylpyrrolidon, Dimethylformamid, Dimethylsulfoxid, Methylethylketon, Dibutylether, Tetrahydrofuran, 1,4-Dioxan, Aceton, Cyclohexanon, Toluol, Xylol, Chloroform, Butylgtykol, Ethylglykol, Ethylacetat, Methylenchlorid, Trichlorethylen, Isopropanol, Methanol, Ethanol, Butanon und Ethantetrachlorid sowie insbesondere Gemische hiervon sowie Gemische mit Wasser geeignet

Als Katalysator haben sich insbesondere basische Verbindungen wie Natriummethanolat, Kalium-tert.butylat, Na-oxalatessigester oder Dimethylaminopyridin bewährt, weiterhin geeignet ist aber auch o-Butyltitanat oder NaOH als Zusatz.

Zusätzlich können auch in Kombination mit den oben genannten Komponenten weitere Tenside zur Ablösung der Magnetschicht eingesetzt werden. Beispiele für geeignete weitere Tenside sind höhere Fettsäuren oder Oxoalkohole, die mit Ethylenoxid, Propylenoxid oder Butylenoxid alkoxyliert wurden, so daß sie im Lösungsmittelsystem löslich oder dispergierbar sind, zum Beispiel C-13 oder C-15 Oxoalkohol mit Ethylenoxid ethoxyliert.

Die oben beschriebene Zusammensetzung arbeitet weitgehend im alkalischen Bereich.

Der Durchflußmischer (3) wird motorisch betrieben und enthält in seinem Innenraum Schaufeln zur Mischung von Schnitzeln und Entschichtungsmittel. Er kann zur Durchsatzsteigerung horizontal oder mit einer Neigung bis 90°, vorzugsweise im Bereich von 5° bis 45° in Durchflußrichtung aufgebaut werden. Wie aus den späteren Beispielen hervorgeht, beträgt die Durchlaufzeit der Folienschnitzel im allgemeinen einige Minuten bei normaler Raumtemperatur. Die Durchlaufzeit wird durch die Drehzahl im Durchflußmischer, seine Neigung, die Behandlungstemperatur sowie durch den Durchsatz des Lösemittels und die Menge der eingegebenen zu entschichtenden Schnitzel bestimmt. Die Behandlungstemperatur ist Raumtemperatur.

Anschließend gelangen die entschichteten Schnitzel (12') auf eine Trennvorrichtung, beispielsweise ein Fördersieb (4), von dem das Lösemittel über eine Leitung in das Absetzbecken (5) geleitet wird. In dieses Becken münden auch über eine oder mehrere Leitungen die aus dem ersten Durchflußmischer (3) über Filter (32) abfiltrierten überschüssigen Lösungsmittel. In dem Absetzbecken können sich per Schwerkraft die aus der Beschichtung abgelösten Pigmente sammeln, wobei magnetische Pigmente beispielsweise durch ein Magnetfeld zum Absetzen angezogen werden. Das Lösemittel wird mit einer Pumpe (19) aus dem Absatzbecken abgepumpt und einer Trenneinrichtung (20) zur Trennung von flüssigen und festen Bestandteilen, beispielsweise einem mit Zentrifugalkraft wirkenden Hydrozyklon, zugeführt, aus dem die festen Bestandteile in das Absetzbecken (5) zurückgeführt werden, während das flüssige Medium wieder über eine Leitung dem ersten Lösungsmittelbehälter (2) zugeführt wird, so daß auf diese Weise ein vollständiger Zyklus (1) erreicht worden ist. Gegebenenfalls kann das Trennen von den festen Bestandteilen auch im Lösungsmittelbehälter (2) geschehen.

Da sich bei der Behandlung der Folienschnitzel eine Änderung der Zusammensetzung des Entschichtungsmediums ergeben haben kann, ist mit dem Vorratsbehälter eine nicht näher dargestellte Regelapparatur zur Potentialmessung oder Leitfähigkeitsmessung verbunden, welche die Zusammensetzung der rücklaufenden Lösung kontrolliert und gegebenenfalls durch Zugabe eines oder mehrerer Stoffe wieder die gewünschte Zusammensetzung herstellt, so daß das Entschichtungsmittel wiederum in den Kreislauf (1) gelangen kann.

Anschließend werden die Folienschnitzel einem zweiten Kreislauf II zugeführt, bestehend aus einem zweiten Durchflußmischer (6), welcher genauso aufgebaut ist wie der erste. Diesem werden die Folienschnitzel (12') zugegeben und gleichfalls an ein oder mehreren Stellen ein Gemisch von organischem Lösemittel und/oder Wasser, welches aus einer Ringleitung kommt, zudosiert. Die Behandlung ist im übrigen so wie im ersten Kreislauf bereits geschildert. Die so gereinigten Folienschnitzel (12"), von denen noch anhaftende Pigment- oder Bindemittelreste größtenteils abgelöst worden sind, gelangen anschließend auf ein zweites Fördersieb (7). Das überschüssige Lösemittel aus dem zweiten Durchflußmischer und dem Fördersieb gelangt in ein zweites Absetzbecken (8), welches den gleichen Zweck hat wie das erste Absetzbecken und aus dem das Lösemittel beziehungsweise Lösemittelgemisch wieder über eine Pumpe (21) und eine zweite Trennvorrichtung (22) in den Kreislauf zurückgeführt wird, so daß es zum weiteren Einsatz im zweiten Durchflußmischer (6) geeignet ist Gegebenenfalls ist ähnlich wie im ersten Kreislauf ein (nicht gezeichneter) Pufferbehälter zwischengeschaltet.

Von dem zweiten Fördersieb (7) gelangen die Folienschnitzel in einen dritten Kreislauf III, bestehend aus einem Förderband (9), auf welchem die Folienschnitzel mit Wasserstrahlen oder Lösemittel gewaschen beziehungsweise besprüht werden. Dieses Medium gelangt über ein drittes Absetzbecken (10) zum Absetzten noch verbleibender fester Reste und nach Abpumpung (23) in eine dritte Trennvorrichtung (24) und dann zurück in die Ringleitung.

Die so erhaltenen endgültig gereinigten und entschichteten Folienschnitzel (12"') werden einer Trocknungs-/Preßvorrichtung (25) zugeführt, anschließend in einer Mühle (26) feingemahlen und abschließend einem Plastagglomerator (27) zugeführt, wo sie entsprechend ihrem weiteren Verwendungszweck in den gewünschten Zustand gebracht werden.

Die rückgewonnenen entschichteten Folienschnitzel können auf folgende Weise weiterverarbeitet werden:
- Werkstoffliche Wiederverwendung beispielsweise bei Polyethylenterephthalat als Rohstoff für die Herstellung von Fasem, Folien, Faservlies, Geotextil oder anderen geformten Kunststoffgegenständen.
- Rohstoffliche Wiederverwendung, beispielsweise bei Polyethylenterephthalat
   o durch partielle Glykolyse und Verwendung des entstandenen Produkts als Polyol für die Polyurethanherstellung, zum Beispiel Hartschaum
   o durch vollständige Glykolyse/Methanolyse und Verwendung des entstandenen Produkts als Rohstoff für die emeute Polyestersynthese.

Die aus den Absatzbecken (5, 8, 10) gewonnenen abgewaschenen Pigmente, beispielsweise Farbpigmente oder Magnetpulver, werden vom Lösemittel befreit, im Vakuum getrocknet und ihrer Wiederverwendung zugeführt.

Das Trocknen der Pigmente kann durch Lösemittelbehandlung in überhitzter Dampfform geschehen, wobei dadurch unter Umständen eine Agglomeration vermieden wird. Die Trocknung der Pigmente wird beispielsweise in einem Schaufeltrockner durchgeführt, in welchem mit Temperatur- und Unterdruckbeaufschlagung die Pigmente intensiv durchgemischt werden.

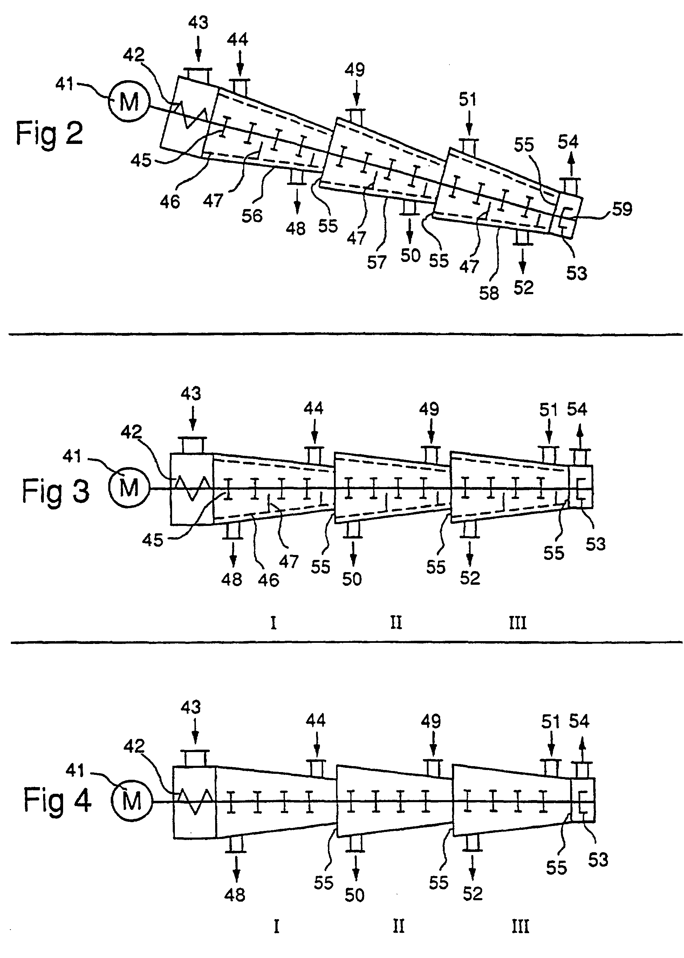

Weitere bevorzugte Ausführungsformen des erfindungsgemäßen Verfahrens werden nunmehr anhand der Figuren 2 - 4 erläutert. Das gemeinsame Merkmal dieser dargestellten Durchlußmischer ist, daß sie mehrstufig aufgebaut sind, so daß die flüssigen Behandlungsmedien beziehungsweise Entschichtungsmittel, welche im Beispiel der Figur 1 in drei getrennten Kreisläufen jeweils einstufigen Durchflußmischem beziehungsweise Waschanlagen zugeführt werden, diesmal nacheinander in einen einzigen, aus mehreren Kammern bestehenden Durchflußmischer gelangen, wobei jedoch die übrigen Teile der jeweiligen (nicht dargestellten) Kreisläufe genauso wie in der Figur 1 dargestellt beschaffen sein können.

Wie weiter unten aufgezeigt wird, können mit einem derartigen mehrstufigen Durchflußmischer, welcher beispielsweise aus drei Stufen beziehungsweise Kammern besteht, drei Verfahrenszonen innerhalb des Mischers geschaffen werden:
- Stufe 1:: Anlösen und Entschichten
- Stufe 2:: Entschichten und Waschen
- Stufe 3:: Waschen

Die Figur 2 stellt einen in Durchflußrichtung unter einem Winkel von etwa 15° geneigten dreistufigen doppelwandigen Durchflußmischer dar. Mittels eines Motors (41) wird eine durchgehende Rührwelle (59) angetrieben, welche im Einlaufbereich (43) der Folienschnitzel eine Einzugsschnecke (42) aufweist und in den übrigen drei Kammem (56, 57, 58) mit Schaufeln (45) versehen ist. Durch den Zulauf (44) gelangt ähnlich wie im ersten Kreislauf nach Figur 1 das erste Entschichtungsmittel in die erste Kammer (56) des dreistufigen Durchlaufmischers und wird durch die Schaufeln mit den Folienschnitzeln in Flußrichtung intensiv durchmischt. Der Querschnitt dieser ersten Kammer verengt sich konisch in Förderrichtung. Durch zusätzliche in den Kammern eingebauten kreisförmige Stauscheiben (47) kann die Verweil zeit der Folienschnitzel und dadurch die erforderliche Intensität der Schnitzelbehandlung eingestellt werden. Der mit der bereits erwähnten Einzugsschnecke versehene Einlaufbereich kann bereits ein Anlösen der Beschichtung bewirken. Wie weiterhin aus der Figur 2 hervorgeht, ist der Durchflußmischer doppelwandig aufgebaut, und zwar ist als Innenmantel ein Lochblech (46) ebenso konisch verlaufend wie der Außenmantel koaxial zu diesem angeordnet. Infolge der durch die Schaufeln (45) bewirkten Fliehkräfte wird die Beschichtung mit dem Lösemittelstrom durch das Lochblech abgeschieden und durch die Öffnung (48) am Ende der ersten Kammer ausgetragen.

Anschließend gelangen die Folienschnitzel in die zweite Kammer (57), die ähnlich wie die erste Kammer aufgebaut ist. Diese zweite Kammer wird bevorzugt mit einem Lösemittelgemisch wie im Kreislauf II gemäß Figur 1 analog der ersten Kammer beaufschlagt. Abschließend gelangen die Schnitzel in die dritte Kammer (58), wo sie bevorzugt mit Wasser oder Lösemittel analog dem Kreislauf III gewaschen werden. Auch die vorgenannten zweiten und dritten Kammem sind jedesmal mit Zulauföffnungen (49, 51) und Austragsöffnungen (50, 52) für das Lösemittel und das Wasser versehen und werden ebenfalls in Durchlaufrichtung der Schnitzel mit dem Entschichtungsmedium beaufschlagt. Abschließend gelangen die Schnitzel in eine mit einer Austragsöffnung (54) versehene Abschlußkammer, in der eine mit der Rührwelle verbundene Austragsschaufel (53) angeordnet ist. Diese kann beispielsweise als Rechen oder Siebblech ausgebildet sein, um den Lösemittelaustrag zu minimieren.

Zwischen den einzelnen Kammern (56, 57, 58) können sich jeweils Trennvorrichtungen (55), beispielsweise in Form von Lochscheiben befinden, um den Lösemittel- und Schnitzeldurchfluß in die jeweils nächste Kammer zu regulieren.

Nach dem Austrag der Schnitzel aus dem beschriebenen Mischer erfolgt die Weiterbehandlung der entschichteten Folienschnitzel wie bereits oben beschrieben.

Die Figur 3 zeigt einen ebenfalls dreistufig und doppelwandig ausgebildeten Durchflußmischer, der genauso aufgebaut ist wie der in Figur 2 gezeigte, jedoch mit dem Unterschied, daß die Entschichtungs- beziehungsweise Löse- und Waschmittel im Gegenstrom durch die in den drei Kammem (56, 57, 58) angeordneten Zuläufe (44, 49, 51), welche jeweils am Ende jeder Kammer angeordnet sind, zugegeben und die mit Entschichtungsschlamm beladene Flüssigkeit dann jeweils durch die am Anfang jeder Kammer angeordneten Austragsöffnungen (48, 50, 52) abgezogen werden. Bei dieser Anordnung braucht der Durchflußmischer nicht in Laufrichtung geneigt zu sein, sondem er ist bevorzugt horizontal angeordnet.

Schließlich zeigt die Figur 4 einen dreistufigen Durchflußmischer nach dem Dekanter-Prinzip, bei welchern die Entschichtungsmittel gleichfalls im Gegenstromprinzip zugegeben werden, bei dem jedoch keine Stauscheiben in den Kammern angeordnet sind, sondem bei dem infolge der Zentrifugalkräfte erreicht wird, daß die abgelöste Beschichtung bevorzugt im Gegenstrom zur Förderung der Folienschnitzel zu den Abflußöffnungen geführt wird. Auch dieser beschriebene Durchflußmischer wird bevorzugt in horizontaler Anordnung betrieben.

Selbstverständlich sind auch weitere Anordnungen eines Durchflußmischers analoger Bauart denkbar. Beispielsweise kann der Durchflußmischer lediglich aus zwei Kammem bestehen, während der Kreislauf III nach Figur 1 unverändert beibehalten wird. Ebenso sind auch mehr als drei Kammern, falls erforderlich, zur Ablösung der Beschichtung der Folienschnitzel denkbar.

Im folgenden wird anhand eines zu entschichtenden Magnetbandes das erfindungsgemäße Verfahren durch Beispiele näher beschrieben, ohne jedoch die Erfindung hierauf zu beschränken.

Die Folienschnitzel waren kleingehäckseltes Magnetbandmaterial, bestehend aus einer handelsüblichen PET-Trägerfolie, beschichtet mit einer magnetischen Dispersion mit der Zusammensetzung

| | Gew.-Teile |
|---|---|
| feinteiliges nadelförmiges CrO₂ | 11 |
| hochmolekulares Polyurethan | 1,6 |
| Vinylcopolymer VAGH | 0,6 |
| Gleitmittel | 0,04 |
| Dispergator | 0,2 |
| Vernetzer Polyisocyanat | 0,4 |
| Lösemittel | 23 |

Die Dispersion wurde auf einen unmagnetischen 15 µm dicken Polyethylenterephthalat-Schichtträger mit einer Trockendicke von 3,5 µm mittels eines üblichen Extrudergießers gegossen, anschließend getrocknet, kalandriert und einer Temperier-Nachbehandlung unterzogen. Zur Herstellung von Videoband wurden die beschichteten Folien in Längsrichtung in Halbzoll-Breite (1,27 cm) geschnitten.

### Beispiel 1

In einem Rührkessel wurde eine Lösung von 18 kg Schmierseife in 96 kg Methanol hergestellt; dieser Lösung wurden 500 kg eines 1 : 1-Gemischs Tetrahydrofuran/Dioxan zugegeben. Als Katalysator wurden 1,5 l 15%iger wässriger NaOH-Lösung zugegeben. Die so hergestellte Entschichtungslösung wurde einem unter 15° in Flußrichtung geneigten Durchflußmischer zugeführt, welcher ein Volumen von 40 l hatte, verschiedene Auflockerungs- und Verdichtungszonen enthielt und mit Mischschaufeln bestückt war, welche mit 1000 U/min. betrieben wurden und wobei der Lösemitteldurchfluß 12 l/min. betrug. Gleichzeitig wurden in den Durchflußmischer Folienschnitzel in einer Dosierung von 1 kg/min. zugeführt. Die Folienschnitzel hatten eine durchschnittliche Länge von 3 cm. Die Anordnung war im übrigen wie in Figur 1 dargestellt.

Im zweiten Kreislauf war das Behandlungsmittel ein 1 : 1-Gemisch von Tetrahydrofuran/ Dioxan, im dritten Kreislauf Leitungswasser, was unter einem Druck von 0,3 bar aufgesprüht wurde. Die durchschnittlichen Verweilzeiten im ersten und zweiten Durchflußmischer betrugen jeweils 2,5 Minuten bei Raumtemperatur. Anschließend waren die Folienschnitzel bis auf wenige mikroskopisch kleine Pigmentpunkte völlig entschichtet.

### Beispiel 2

Es wurde verfahren wie in Beispiel 1, jedoch bei einem Lösemittelfluß von 27 l/min im ersten Kreislauf. Diesmal betrug die durchschnittliche Verweilzeit der Folienschnitzel im ersten Mischer 1,1 Minuten, wobei die gleiche Produktqualität wie im Beispiel 1 erreicht wurde.

### Beispiel 3

Es wurde verfahren wie in Beispiel 1, jedoch wurde im ersten Behandlungsmedium der Katalysator NaOH weggelassen. Die durchschnittliche Verweilzeit im ersten Mischer mußte auf 5 Minuten erhöht werden, um die gleiche Produktqualität wie in Beispiel 1 zu erreichen.

### Beispiel 4

Es wurde verfahren wie in Beispiel 1, jedoch wurde beim ersten Behandlungsmedium die Schmierseife durch die gleiche Menge an Mukasol® ersetzt Nach einer durchschnittlichen Verweilzeit von 3 Minuten im ersten Mischer wurde die gleiche Produktqualität der Folienschnitzel wie in den vorigen Versuchen erreicht

### Beispiel 5

Die drei Entschichtungslösungen im ersten, zweiten und dritten Kreislauf waren so wie in Beispiel 1 geschildert, jedoch wurde ein dreistufiger Durchflußmischer im Gegenstrom-Prinzip wie in Figur 3 dargestellt eingesetzt, welcher horizontal angeordnet war und wobei dessen erste Kammer ein Volumen von 20 l, dessen zweite Kammer ein Volumen von 20 l und dessen dritte Kammer ein Volumen von 20 l besaßen. Durch die Einlaufschnecke wurden dem Mischer 5 kg Folienschnitzel pro Minute zugeführt, durch den ersten Einlauf 50 l pro Minute der ersten Entschichtungslösung, wobei aus dem ersten Auslauf 10 l mit der Beschichtung versehenes Lösemittel austrat. In der zweiten Kammer war der Zulauf 10 l/min. und der Auslauf 50 l/min.; in der dritten Kammer war der Einlauf von Wasser 50 l/min. und der Auslauf 45 l/min. Auch dabei wurde eine vollständige Entschichtung und Trennung von den Beschichtungsresten der Folienschnitzel erreicht.

### Vergleichsbeispiel

Es wurde verfahren wie in Beispiel 1, jedoch wurde die Schmierseife weggelassen. Dabei konnte auch bei einer Verlängerung der Verweilzeit der Folienschnitzel im ersten Mischer bis 15 Minuten keine Entschichtung erreicht werden.

Die Produktqualität des wiedergewonnenen Polyethylenterephthalats wurde bestimmt durch die Restmessung des Chromgehalts und der Lösungsviskosität (vgl. Tabelle). Zur Bestimmung der Produktqualität kann auch die Farbzahl angegeben werden.

**Tabelle**

| | Entschichtung ^{a} | Cr-Gehalt [ppm] ^{b} | η_{spez} [ml/g] ^{c} |
|---|---|---|---|
| Beispiel 1 | 1 | 25 | 66 |
| Beispiel 2 | 1 | 25 | 66 |
| Beispiel 3 | 2 | 30 | 67 |
| Beispiel 4 | 2 | 25 | 66 |
| Beispiel 5 | 1 | 20 | 66 |
| Vergleichsbeispiel | 4 | - | 60 |

### ^{a} Entschichtungsergebnis

Das Ergebnis der Entschichtung wurde qualitativ durch Sichtprüfung beurteilt. Bewertet wurde die Häufigkeit von nicht abgelösten Schichtresten, die im Falle der Magnetbänder als schwarze Punkte auf der Folie zu erkennen sind. Die Note 1 wurde vergeben, wenn von mindestens zwanzig stichprobenartig untersuchten Folienschnitzeln keiner mit Schichtresten behaftet war. Für die Note 2 darf höchstens einer der Folienschnitzel belastet sein, bei Note 3 sind die Schichtreste noch häufiger. Note 4 kennzeichnet eine ungenügende Entschichtung.

### ^{b} Cr-Gehalt

Der Cr-Gehalt der entschichteten Folienschnitzel dient als Merkmal für nicht sichtbare Rückstände der Magnetschicht auf der Folie. Er wurde über Atomemissionsspektroskopie jeweils an mindestens vier Proben bestimmt. Der Cr-Gehalt sollte höchstens 100 ppm betragen und idealerweise unter 40 ppm liegen oder noch besser gar nicht vorhanden sein.

### ^{c} Spezifische Viskosität

Durch die Messung der spezifischen Lösungsviskosität wurde nachgewiesen. daß das Molekulargewicht des PET-Folienmaterials nicht durch die Entschichtungsbehandlung beeinträchtigt wird. Proben der entschichteten Folienschnitzel wurden in Phenol/o-Dichlorbenzol (1/1, w/w) gelöst, die relative Lösungsviskosität dieser Lösungen in einem Ubbelohde-Kapillarviskosimeter bestimmt und die spezifische Lösungsviskosität berechnet. Die Konzentration dieser Lösungen betrug 0,5 g Polymer pro 100 ml Lösung; die Meßtemperatur war 25.0 °C. Zum Vergleich wurde die spezifische Lösungsviskosität des unbeschichteten sowie unbehandelten Folienmaterials bestimmt. Sie betrug für die verwendete PET-Folie 66 ml/g. Die spezifische Lösungsviskosität sollte weniger als 10 % von der der unbeschichteten PET-Folie abweichen und insbesondere höchstens 4 % davon abweichen.

Analoge Entschichtungsergebnisse wurden erreicht, wenn als Schichtträgermaterial Polyethylennaphthalat oder Celluloseacetat verwendet wurden oder statt der magnetischen Beschichtung eine fotografische Beschichtung abgelöst werden sollte. Ebenso konnten Druckplatten, pigmentfreie Beschichtungen sowie bedruckte Polyethylenterephthalat-Folien entschichtet werden.

## Patentansprüche

1. Kontinuierlich ablaufendes Verfahren zur Wiedergewinnung von Rohmaterialien aus kleingeschnittenen Abfällen von beschichteten Folien, bestehend aus einem polymeren Schichtträger und einer darauf befindlichen Beschichtung oder Bedruckung, bei der gegebenenfalls Pigmente in einer vernetzten und/oder unvernetzten Bindemittelmatrix dispergiert sind und wobei das Schichtträgermaterial sowie gegebenenfalls die Pigmente durch Behandlung in flüssigen Medien wiedergewonnen werden, wobei aus einem ersten Vorratsbehälter (1) die beschichteten Folienabfälle und aus einem zweiten Vorratsbehälter (2) eine erste Entschichtungslösung, bestehend aus einem oder mehreren Tensiden oder deren Salze, einem oder mehreren organischen Lösungsmitteln und/oder Wasser, gegebenenfalls unter Zusatz von basischen Katalysatoren in einem ersten Kreislauf einem Durchflußmischer (3) zugeführt werden, wobei anschließend die Folienschnitzel von der überschüssigen Entschichtungslösung getrennt werden und wobei die Lösung zum Absetzen oder nach dem Absetzen der in ihr suspendierten Feststoffe in einen zweiten Vorratsbehälter (2) zurückgeführt wird, **dadurch gekennzeichnet,**
- **daß** das Verfahren bei Raumtemperatur durchgeführt wird und
- **daß** die im ersten Kreislauf behandelten Folienschnitzel (12) in einem zweiten Kreislauf erneut einem Durchflußmischer (6) zugegeben werden, dem eine zweite Entschichtungslösung zudosiert wird, danach von dieser getrennt werden und wobei die Lösung von festen Bestandteilen getrennt und wieder dem Durchflußmischer (6) zugeführt wird und
- **daß** die aus dem zweiten Kreislauf kommenden entschichteten Folienschnitzel (12") in einem dritten Kreislauf in eine Waschanlage (9) überführt und dort mit einer aus einem Kreislaufsystem (11) kommenden dritten Entschichtungslösung, vorzugsweise Wasser oder Lösemittel abgewaschen oder abgesprüht werden und daß die Behandlungsflüssigkeit, von den festen Bestandteilen getrennt, in den Kreislauf (11) zurück geführt wird.

2. Verfahren nach Anspruch 1, **dadurch gekennzeichnet, daß** zumindest zwei unterschiedliche Entschichtungslösungen zum Einsatz kommen.

3. Verfahren nach Anspruch 1, **dadurch gekennzeichnet, daß** zumindest eine Entschichtungslösung mittels Potential- oder Leitfähigkeitsmessung auf ihre Zusammensetzung geprüft und gegebenenfalls durch automatische Zugabe eines oder mehrerer Inhaltsstoffe wieder auf Sollzusammensetzung gebracht wird.

4. Verfahren nach Anspruch 2 und 3, **dadurch gekennzeichnet**, durch seine Verwendung für die Wiedergewinnung von Rohmaterialien aus magnetischen Aufzeichnungsträgern, insbesondere Magnetfolien, bestehend aus einer PET - Folie als Schichtträger und einer CrO₂ enthaltenden Magnetbeschichtung oder Bedruckung.

5. Vorrichtung zur Durchführung des Verfahrens nach Anspruch 1, wobei die Durchflußmischer (3, 6) für den ersten und zweiten Kreislauf jeweils Kammern sind, die in ihrem Innenraum motorisch betriebene Schaufeln (45) zur Durchmischung von Folienschnitzeln und Entschichtungsmittel enthalten und wobei für den dritten Kreislauf ein Förderband (9) vorgesehen ist, auf welchem die Folienschnitzel gewaschen bzw. besprüht werden.

6. Vorrichtung zur Durchführung des Verfahrens nach Anspruch 1, wobei ein mehrstufiger Durchflußmischer für die drei Kreisläufe vorgesehen ist, bestehend aus vorzugsweise drei miteinander verbundenen Kammern (56, 57, 58) mit einer motorisch betriebenen durchgehenden Rührwelle (59), durch welche nacheinander die Folienschnitzel gelangen und wobei jede Kammer jeweils mit einer Eintrittsöffnung (44, 49, 51) und mit einer Ausgangsöffnung (48, 50, 52) zum Zuführen bzw. Abführen der Entschichtungsflüssigkeit vorgesehen sind.

7. Vorrichtung nach Anspruch 6, **dadurch gekennzeichnet, daß** die Kammern motorisch (41) betriebene Schaufeln (45) sowie Stauscheiben (47) enthalten.

8. Vorrichtung nach Anspruch 6, **dadurch gekennzeichnet, daß** der Durchflußmischer in seinem Innenraum benachbart zur Außenwandung koaxiale Lochbleche (46) zur Trennung der Beschichtung von den Folienschnitzeln aufweist.

9. Vorrichtung nach Anspruch 6, **dadurch gekennzeichnet, daß** jede der Kammern (56, 57, 58) des Durchflußmischers mit Entschichtungsmittel im Gleichstrom oder Gegenstrom zur Förderrichtung der Folienschnitzel betreibbar ist.

10. Vorrichtung nach Anspruch 6, **dadurch gekennzeichnet, daß** der Durchflußmischer um 5 bis 90° in Förderrichtung gegen die Horizontale geneigt ist.

11. Vorrichtung nach Anspruch 6, **dadurch gekennzeichnet, daß** sich die Kammern in Flußrichtung verengen.

## Claims

1. A continuous process for recovering raw materials from finely chopped wastes of coated films, consisting of a polymeric substrate and a coating or print present thereon, in which pigments may be dispersed in a crosslinked or uncrosslinked binder matrix, the substrate material and, if required, the pigments being recovered by treatment in a liquid medium, the coated film wastes being fed from a first storage container (1) and a first delamination solution, consisting of one or more surfactants or salts thereof, one or more organic solvents or water, with or without the addition of basic catalysts, from a second storage container (2) to a flow mixer (3) in a first circulation, the film shreds then being separated from the excess delamination solution and the solution being recycled to a second storage container (2) for settling or after the solids suspended in it have settled out, wherein
- the process is carried out at room temperature and
- the film shreds (12) treated in the first circulation are again fed to a flow mixer (6) in a second circulation, to which a second delamination solution is metered, and then separated from said solution, the solution being separated from solid components and being recycled to the flow mixer (6) and
- the delaminated film shreds (12") arriving from the second circulation are transferred to a wash unit (9) in a third circulation and washed or sprayed there with a third delamination solution, preferably water or solvent, arriving from a circulation system (11), and the treatment liquid is separated from solid components and recycled to the circulation (11).

2. A process as claimed in claim 1, wherein at least two different delamination solutions are used.

3. A process as claimed in claim 1, wherein the composition of at least one delamination solution is tested by means of potential or conductivity measurement and, if required, the comosition is brought back to the required composition by automatic addition of one or more ingredients.

4. A process as claimed in claims 2 and 3, which is used for recovering raw materials from magnetic recording media, in particular magnetic films, consisting of a PET film as substrate and a CrO₂-containing magnetic coating or print.

5. Apparatus for carrying out a process as claimed in claim 1, the flow mixer (3, 6) for the first and second circulation each being chambers which contain in their interior motor-operated blades (45) for thorough mixing of film shreds and delamination composition, and a conveyor belt (9) on which the film shreds are washed or sprayed being provided for the third circulation.

6. Apparatus for carrying out a process as claimed in claim 1, a multispeed flow mixer being provided for the three circulations and preferably consisting of three chambers (56, 57, 58) which are connected to one another and have a motor-operated continuous stirring shaft (59) and through which the film shreds pass in succession, and each chamber being provided with an inlet orifice (44, 49, 51) and with an outlet orifice (48, 50, 52), respectively for feeding and removing the delamination liquid.

7. Apparatus as claimed in claim 6, wherein the chambers contain motor-operated (41) blades (45) and baffles (47).

8. Apparatus as claimed in claim 6, wherein the flow mixer has, in its interior adjacent to the outer wall, coaxial perforated plates (46) for separating the coating from the film shreds.

9. Apparatus as claimed in claim 6, wherein each of the chambers (56, 57, 58) can be operated with delamination composition cocurrent or countercurrent to the transport direction of the film shreds.

10. Apparatus as claimed in claim 6, wherein the flow mixer is inclined by from 5 to 90° relative to the horizontal in the transport direction.

11. Apparatus as claimed in claim 6, wherein the chambers narrow in the direction of flow.

## Revendications

1. Procédé se déroulant en continu pour la récupération de matières premières à partir de déchets en petits fragments de pellicules revêtues consistant en un support de couche polymère et en un revêtement ou une impression se trouvant sur celui-ci, dans lequel éventuellement des pigments sont dispersés dans une matrice de liant réticulée et/ou non réticulée, et le matériau de support de couche ainsi qu'éventuellement les pigments sont récupérés par traitement dans des milieux liquides, dans lequel, à partir d'un premier réservoir de stockage (1) les déchets de pellicule revêtus et, à partir d'un second réservoir de stockage (2), une solution d'enlèvement de couche, constituée d'un ou plusieurs tensioactifs ou de leurs sels, d'un ou plusieurs solvants organiques et/ou d'eau, éventuellement avec addition de catalyseurs basiques, sont envoyés dans un premier circuit à un mélangeur en continu à courant (3), les fragments de pellicule étant ensuite séparés de la solution d'enlèvement de couche en excès et la solution étant renvoyée dans un second réservoir de stockage (2), pour le dépôt ou après le dépôt des matières solides en suspension dans celle-ci, **caractérisé en ce que**
- le procédé est effectué à la température ambiante et
- les fragments de pellicule (12) traités dans un premier circuit sont introduits de nouveau, dans un deuxième circuit, dans un mélangeur en continu à courant (6) dans lequel est introduite une deuxième solution d'enlèvement de couche, puis sont séparés de celle-ci, et la solution étant séparée des composants solides et envoyée de nouveau au mélangeur en continu à courant (6), et
- les fragments de pellicule (12") privés de couche, provenant du deuxième circuit, sont transférés, dans un troisième circuit, dans une unité de lavage (9) et y sont lavés ou arrosés avec une troisième solution d'enlèvement de couche, de préférence de l'eau ou un solvant, provenant d'un système en circuit (11), et **en ce que** le liquide de traitement, séparé des composants solides, est renvoyé dans le circuit (11).

2. Procédé selon la revendication 1, **caractérisé en ce qu'**on utilise au moins deux solutions différentes d'enlèvement de couche.

3. Procédé selon la revendication 1, **caractérisé en ce qu'**au moins une solution d'enlèvement de couche est contrôlée quant à sa composition, par mesure du potentiel ou de la conductivité, et éventuellement ramenée à la composition prescrite par addition automatique d'un ou plusieurs composants.

4. Procédé selon les revendications 2 et 3, **caractérisé par** son utilisation pour la récupération de matières premières provenant de supports d'enregistrement magnétique, notamment de pellicules magnétiques, consistant en une pellicule de PET en tant que support de couche et en une impression ou un revêtement magnétique contenant du CrO₂.

5. Dispositif pour la mise en oeuvre du procédé selon la revendication 1, dans lequel les mélangeurs en continu à courant (3, 6) pour le premier circuit et le deuxième sont chacun des chambres qui contiennent dans leur espace intérieur des pales (45) mues par un moteur, pour le mélange des fragments de pellicule et de l'agent d'enlèvement de couche, et dans lequel est prévue pour le troisième circuit une bande transporteuse (9) sur laquelle les fragments de pellicule sont lavés ou arrosés.

6. Dispositif pour la mise en oeuvre du procédé selon la revendication 1, dans lequel est prévu pour les trois circuits un mélangeur en continu à courant et à plusieurs étages, consistant de préférence en trois chambres raccordées les unes aux autres (56, 57, 58), avec un arbre d'agitateur (59) traversant, mû par un moteur, que traversent successivement les fragments de pellicule, et chaque chambre étant munie d'un orifice d'entrée (44, 49, 51) et d'un orifice de sortie (48, 50, 52) pour l'introduction et, respectivement, l'évacuation du liquide d'enlèvement de couche.

7. Dispositif selon la revendication 6, **caractérisé en ce que** les chambres contiennent des pales (45) mues par un moteur (41) ainsi que des chicanes (47).

8. Dispositif selon la revendication 6, **caractérisé en ce que** le mélangeur en continu à courant présente dans son espace intérieur, au voisinage de la paroi externe, des tôles perforées coaxiales (46) pour la séparation du revêtement d'avec les fragments de pellicule.

9. Dispositif selon la revendication 6, **caractérisé en ce que** chacune des chambres (56, 57, 58) du mélangeur en continu à courant est capable de fonctionner avec l'agent d'enlèvement de couche en flux co-courant ou à contre-courant par rapport au sens de transport des fragments de pellicule.

10. Dispositif selon la revendication 6, **caractérisé en ce que** le mélangeur en continu à courant est incliné de 5 à 90° par rapport à l'horizontale, dans le sens du transport.

11. Dispositif selon la revendication 6, **caractérisé en ce que** les chambres se rétrécissent dans le sens du flux.
